(19) Europäisches Patentamt
European Patent Office
Office européen des brevets

(11) **EP 2 921 242 B1**

(12) **EUROPEAN PATENT SPECIFICATION**

(45) Date of publication and mention of the grant of the patent:
**06.09.2017 Bulletin 2017/36**

(21) Application number: **15159186.4**

(22) Date of filing: **16.03.2015**

(51) Int Cl.:
**B21D 39/04** (2006.01)    **F16L 13/14** (2006.01)
**F16L 33/207** (2006.01)    **G01L 19/08** (2006.01)
**G01M 3/04** (2006.01)    **H01R 43/042** (2006.01)
**G01B 7/16** (2006.01)    **G01L 1/14** (2006.01)
**G01L 1/22** (2006.01)    **G01L 5/00** (2006.01)

(54) **Press fitting**

Pressfitting

Raccord de sertissage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2014 IT GE20140025**

(43) Date of publication of application:
**23.09.2015 Bulletin 2015/39**

(73) Proprietor: **Raccorderie Metalliche S.p.A.**
**46010 Marcaria MN (IT)**

(72) Inventors:
• **Picco, Pierluigi**
  **16031 Pieve Ligure (GE) (IT)**
• **Pozzetti, Silvio**
  **46030 Virgilio (MN) (IT)**
• **Ferrari, Vittorio**
  **20136 Milano (IT)**
• **Demori, Marco**
  **37050 Oppeano (VR) (IT)**
• **Baù, Marco**
  **46043 Castiglione delle Stiviere (MN) (IT)**
• **Dalola, Simone**
  **25046 Cazzago San Martino (BS) (IT)**
• **Ferrari, Marco**
  **25133 Brescia (IT)**

(74) Representative: **Karaghiosoff, Giorgio Alessandro**
**Studio Karaghiosoff e Frizzi S.r.l.**
**Via F. Baracca 1R 4° piano**
**17100 Savona (IT)**

(56) References cited:
**EP-A1- 0 185 650**    **EP-A1- 2 379 924**
**EP-A2- 1 772 659**    **WO-A1-2009/003016**
**WO-A1-2009/021972**    **WO-A2-2011/066028**
**WO-A2-2011/156918**    **WO-A2-2013/130782**
**DE-A1- 3 528 510**    **DE-A1-102009 023 208**
**DE-C1- 19 856 769**    **DE-U1- 20 103 434**
**US-A1- 2013 184 995**

• **SANG MIN WON ET AL: "Piezoresistive Strain Sensors and Multiplexed Arrays Using Assemblies of Single-Crystalline Silicon Nanoribbons on Plastic Substrates", IEEE TRANSACTIONS ON ELECTRON DEVICES, IEEE SERVICE CENTER, PISACATAWAY, NJ, US, vol. 58, no. 11, 1 November 2011 (2011-11-01), pages 4074-4078, XP011387131, ISSN: 0018-9383, DOI: 10.1109/TED.2011.2164923**
• **Publisher : Hottinger ET AL: "Karl Hoffmann An Introduction to Measurements using Strain Gages", , 1 January 1989 (1989-01-01), pages 1-255, XP055119007, Retrieved from the Internet: URL:http://www.hbm.com/fileadmin/mediapool /techarticles/hoffmannbook/Hoffmann-book_E N.pdf [retrieved on 2014-05-20]**

EP 2 921 242 B1

**Description**

The present invention relates to a press fitting comprising a socket intended to overlap one end of a pipe or the like and at the region of its end possibly it is provided with at least one radial enlargement, housing a possible annular seal.

Press fittings are currently known and commonly used especially in water systems for domestic use, in industrial systems, in naval systems, and in similar systems.

Press fitting technology currently comprises a socket, with possible different configuration, connectable by clamping it to the end of a connection pipe, possibly at least one seal ring or o-ring placed between the two components and a unit for pressing the socket on the connection pipe.

The pressing unit can be of different type, such as for example pliers, chains etc.

Press fittings used in the several systems have to ensure water tightness and mechanical sealing after the pressing.

Both these types of tightness are obtained during the pressing that causes one or preferably two portions of the socket to be deformed.

Such deformations are not continuous involving the whole circumference but they are discrete in a well defined number of regions, typically six regions, along the circumference.

One of the main problems of the currently known press fittings is that the installer is helped only by information about a monitoring of the trend of the torque applied by the pressing unit and about a final testing for the tightness upon the finishing of the assembling of the whole circuit.

The trend of the torque is a piece of information that guarantees that the pressing unit has generated the predetermined torque, but this is not related at all with the fact that the pressing has properly occurred.

Even a gripping unit not well maintained or, even broken/cracked, guarantees the maximum torque.

Therefore it is possible for the press fitting to be not properly clamped also by a gripping unit that exerts the proper torque, thus not guaranteeing a proper water tightness and/or mechanical sealing.

This anomaly cannot be recognized by the operator during the installation step but it can be determined only during the testing of the finished system.

The aim of the invention is to overcome the drawbacks of the currently known press fittings mentioned above, while guaranteeing the possibility of measuring the strain of the socket.

This strain, measured along the whole circumference or in sectors thereof, is the parameter for the objective and immediate field test of the performed pressing.

One known solution is known in WO2009/021972 that shows a tube connection with readable pressing marker comprises a fitting to which a tube end can be connected, a tube with an end that can be connected to the fitting and a pressing region, wherein a pressing force for connecting the tube end to the fitting can be applied on the fitting and/or the tube end. The pressing region comprises a pressing marker material and/or element. The magnetic and/or electric properties thereof change, when the pressing region is exposed to the pressing force.

Although functional, this solution has the risk that the pressing marker material or elements became damaged during operation.

The invention achieves the above aims by providing a press fitting such as described hereinbefore, which has the characteristics of claim 1.

Thus the press fitting comprises a socket suitably equipped such that it is possible to verify that it has been properly pressed and, accordingly, to verify the proper future performance of the fitting.

In one embodiment the socket on the shell surface has a first portion for the action by a pressing unit and a second portion wherein said strain sensors are provided, the second portion being adjacent to the first one.

Thus the sensors are advantageously placed in the region that is closer to the region of maximum strain of the socket of the fitting, contemporaneously avoiding them from being placed in the region where the pressing unit acts, in order to prevent the sensors from being damaged by the pressing unit during the pressing operation.

As an alternative the sensitive elements can be placed in regions where the strain is not the maximum one.

In one embodiment there is provided a plurality of said sensors placed along the external circumference of the socket.

In this manner a plurality of discrete measurements on different points of the socket are provided, allowing the behavior of the different regions of the circumference of the socket to be separately monitored during the pressing.

Therefore the measurement of the strain is divided in order to obtain more localized information about the strain.

According to one embodiment the sensors are connected with each other and with an output by at least one connection track made of electrically conductive material.

This allows the sensors to be connected with each other by one or more connection tracks, which in turn are the output for the group of sensors.

In a preferred embodiment there are provided six sensors.

According to one embodiment said sensors can be placed along the circumference of the socket according to any angular distribution or with a distribution at regions angularly equidistant from each other.

Six equidistant sensors can easily measure six strains caused by the pressing. This arrangement therefore enables a sufficient resolution in measuring the strain along the circumference of the socket.

As it will be seen in the description below, in this case the individual signals can be used for measuring the trend of the strain exerted on discrete points distributed along the whole circumference of the socket and therefore the signals obtained from the sensors provide a map or a trace of the strains along the circumference. It can be compared with theoretical maps that define trend ranges within which the individual values can vary. The signals of the individual sensors can also contemporaneously be used for defining a single parameter to be compared with a threshold value, such as for example a mean or other functions.

As regards the making of the sensors and of the interfaces of connection and/or communication with a unit processing/evaluating the signals provided by the sensors, two different types are mainly possible that can be used alternatively with each other or also a partial combination.

In one embodiment the sensors and the interfaces are both made in the form of labels or film to be applied on the socket, in the region defined for measuring the strain. They can be made on the same film or can be made on two separate pieces that then are electrically and physically joined with each other.

The second embodiment provides the sensors to be made directly on the socket. A first variant can provide also the communication conductors to be applied directly on the socket. On the contrary a variant provides the communication conductors to be made on a piece of film which is later applied to the socket, the outputs of the sensors being electrically connected to the respective communication conductor.

In the first embodiment the advantage is the possibility of applying the sensor and the communication interface on any fitting, also during a step performed on the finished product and after some time. The second embodiment is cheaper since it does not provide the support and it avoids problems about the adhesion and about the possible proper positioning of the sensors on the socket of the fitting.

According to what generally disclosed above, in one embodiment said sensors are provided on a single flexible substrate attached to the shell surface of the socket for instance by chemical/physical adhesion.

In the case when the sensors are a plurality of sensors, and particularly six, such arrangement is particularly advantageous since it allows a group of sensors comprising the substrate, the sensors and the connection tracks to be assembled and then to be attached to the socket once assembled.

This easily guarantees also the relative distances among the sensors to be correct.

Therefore the aim of the invention is achieved by applying a single sensitive element operating in a discrete manner in the six regions in order to obtain more localized information about the strain.

In this case the sensitive element has been made on a flexible substrate and then brought on the fitting.

In one embodiment the substrate is composed of glossy paper for printing and/or adhesive polyvinyl material.

According to one embodiment the substrate is attached to the socket by an adhesive. The adhesive may be any type and it depends on the type of material of the fitting.

In a further embodiment said sensors are obtained by transferring pastes on the substrate by extrusion through one screen and a subsequent thermal treatment, that is by means of currently known printing techniques, such as screen printing, typography, flexography, by deposition or by digital printing or the like.

In one variant embodiment said one or more sensors are printed directly on the shell surface of the socket.

The sensors are transducers that generate an electric or electromagnetic signal due to a deformation to which the sensor itself is subjected.

Particularly it is possible to provide variable impedance sensors, which vary the impedance due to deformations.

Possible embodiments provide capacitive, resistive or inductive sensors or combinations thereof.

According to one embodiment said one or more sensors comprise one or more resistive strain gauges.

Resistive strain gauges comprise an electrical conductor and they transduce mechanical strains into changes of electrical resistance in the conductor caused by changes in the dimension and in the resistivity of the material according to the formula:

$$\frac{\Delta R}{R} = GF \frac{\Delta L}{L}$$

where $R$ is the resistance, $\Delta R$ is the change in resistance, $L$ is the length of the conductor, $\Delta L$ is the change in length of the conductor and $GF$ is defined as the Gauge Factor, that is the transduction factor, that expresses the sensitivity of the strain gauge.

The conductor typically is shaped with a zig-zag pattern and it is rigidly applied on a carrier typically made of a plastic material, non-conductive or made as non-conductive, which is coupled to the surface of the body whose deformations have to be measured.

The wire of the strain gauge gets deformed based on the strains of the surface to which it is coupled, becoming longer and shorter together with it.

Such changes in the dimension, together with those due to the change in the resistance of the material, cause a change in the electric resistance of the conductor, which therefore can be measured.

Advantageously in the case of resistive strain gauges printed on the shell surface of the socket, a layer of insulating material is placed between the sensor and the socket.

According to a further embodiment the strain gauges are made by a thick film screen printing technology.

According to a variant embodiment said sensors comprise one or more capacitive strain gauges.

The capacitive strain gauges transduce mechanical strains into changes in the electrical capacitance due to changes in the dimension that create a change in the distance in the plates of a capacitor, according to the formula:

$$\frac{\Delta C}{C} = f\left(\frac{\Delta L}{L}\right)$$

where $C$ is the capacitance, $\Delta C$ is the change in the capacitance, $L$ is the distance between the plates of the capacitor, $\Delta L$ is the change in distance between the plates of the capacitor.

As an alternative it is also possible to detect the deformations by changes in the active area according to the expression:

$$\frac{\Delta C}{C} = f\left(\frac{\Delta A}{A}\right)$$

where A is the active area and the remaining quantities are the ones mentioned above.

A further alternative that can be provided also in combination with one or both those already described above, provides to measure the strain by the change in the capacitance due to the change in the dielectric constant caused by the strains of the dielectric material placed between the active areas.

The invention relates to press fittings of any type, with different diameters, different shapes and different materials used.

The present invention further relates to a system for joining pipes comprising at least one press fitting and at least one pressing unit.

The press fitting comprises a socket intended to overlap one end of a pipe terminal, the pressing unit being intended to deform the socket such to clamp it mechanically and tightly against the external shell surface of the pipe.

The system comprises one or more strain gauges able to transduce a strain of the socket into an electrical quantity and means for measuring the electrical quantity.

The strain gauges for example can be provided as an alternative or in combination on the press fitting or on the pressing unit.

According to a preferred embodiment there are provided display means for indicating a value related to the measured strain.

This allows the user to monitor the strain of the press fitting during the installation step.

According to a further improvement there are provided means for setting a threshold strain value, means comparing the measured strain with the threshold value and means indicating the clamping condition with reference to the threshold.

The strain threshold can be advantageously set on the basis of the characteristics of the press fitting and of previous evaluations of the strain necessary for guaranteeing a sufficient water tightness and mechanical sealing.

The means indicating the clamping condition with reference to the threshold indicate whether the occurred strain has been carried out properly or not properly on the basis of the comparison of the measured value with the set threshold value.

In one embodiment there is provided a plurality of said sensors and the display means comprise a display wherein the data detected by said one or more sensors are displayed by a cobweb or polar plot.

The system described above therefore provides an output polar plot where the strains along the socket circumference of the press fitting are displayed detected by each one of the sensors provided on said socket. Therefore it is possible to generate a strain map allowing not only the quality of the crimping, namely the clamping, to be verified with a better resolution but also possible defects or even asymmetric wears of the crimping plier to be detected. In this case it is possible to define a different threshold value for each sensor.

The provision of several sensors arranged along the socket circumference allows also an average value of the strain to be calculated whose intensity is numerically estimated by the comparison with a threshold empirically defined.

In one embodiment the means measuring the electrical quantity comprise a measurement electronic unit.

According to an improvement the measurement electronic unit comprises a storage unit interrogatable by calculation means.

The present invention further relates to a method for making pipe joints comprising the following steps:

 a) surrounding an end of a pipe with a socket coupling end of a press fitting;
 b) straining the socket with a pressing unit such to clamp the socket against the external shell surface of the pipe,
 c) measuring the strain of the socket by one or more strain sensors able to transduce a strain of the socket into an electric quantity.

Step c) is made contemporaneously with step b).

In a preferred embodiment said method is carried out by means of a system as the one described above.

These and other characteristics and advantages of the present invention will be more clear from the following description of some embodiments shown in the annexed drawings wherein:

Fig.1 is one embodiment of a socket of a press fitting, provided with a strain sensor;
Fig.2 is a detail of the socket overlapping the end of a pipe;
Fig.3 is a diagram of the system;
Fig.4 is a plurality of sensors for the divided measurement;
Fig.5 is a single sensor for an integral measurement on the external circumference of the fitting;
Fig.6 is the resistive sensors made by screen printing;
Fig.7 is the connection tracks made by screen printing;
Fig.8 is the complete group of the sensors;
Fig.9 is the resistive sensors made by printing;
Fig.10 is the connection tracks made by printing;
Fig.11 is a diagram of the trend over time of the signals measured by the sensors and due to the deformations;
Fig.12 is a polar plot of the measured signals about the strains measured by the sensors;
Fig.13 schematically is a strain sensor of the capacitive type.

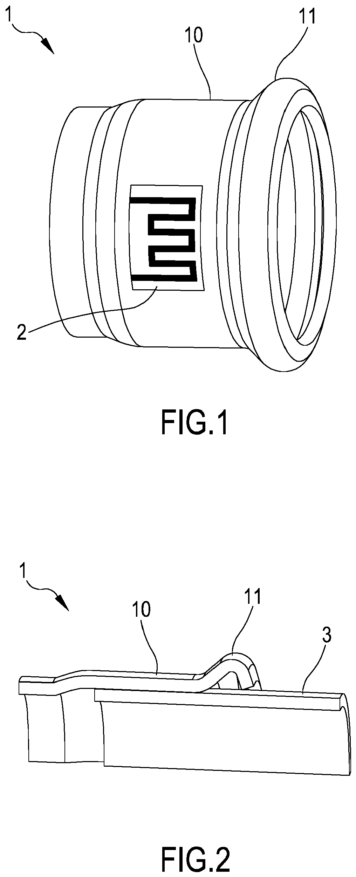

Figure 1 shows a press fitting 1 comprising a socket 10 provided at one end with a radial enlargement 11, within such radial enlargement 11 at least one seal ring is housed, not shown in the figures.

The press fitting is provided with strain sensors 2 able to transduce a strain of the socket 1 into an electrical quantity.

The sensor 2 preferably is a resistive strain gauge but as an alternative or in combination it may be a capacitive strain gauge or another similar sensor.

As it can be seen in figure 2, the socket 10 of the press fitting 1 has a socket coupling end intended to surround an end of a pipe 3.

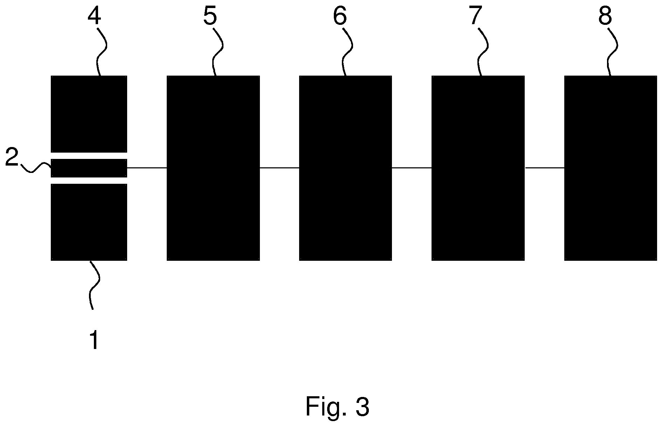

Figure 3 shows a diagram of the system, comprising a press fitting 1, sensor 2, a pressing unit 4, measurement means 5, such as for example an electronic measurement unit, an acquisition unit 6, a calculation unit 7 such as a computer, a PC or the like, and display means 8, such as for example a display and/or a printer.

The sensors and possibly also some of the several operating units forming the system, such as particularly the display, the printer and/or also the calculation unit, can communicate with each other both by means of physical connection lines, that is composed of conductors of several possible types, and at least for some of them by means of TX/RX units of the wireless type. Even in this case the different existing and future communication technologies can be used depending on project needs. Particularly a communication mode can be the use of the so called Rfid tags or the like which are a kind of transponder unit, namely using substantially the energy of the carrier wave of the reader for modulating the response signals thereon. These chips are highly miniaturized and their increasing use in the industrial field is constantly reducing their costs.

The pressing unit 4 is intended to deform the socket 10 such to clamp said socket 10 against the external shell surface of the pipe 3 and it is preferably composed of pliers.

The strain sensors 2 are able to transduce a strain of the socket 10 into an electrical quantity and they can be provided as an alternative or in combination on the press fitting 1 or on the pressing unit 4.

The electrical quantity is measured by a measurement section 5, which is in communication with the acquisition unit 6 for transmitting the measured values to the calculation means 7.

The calculation unit 7 provides an output value related to the strain measured through the display unit 8.

The measurement unit 5 may comprise a memory unit that can be interrogated by the calculation unit also later with respect to the strain.

The calculation unit 7 comprises a section for setting the values for the comparison with the values defined on the basis of the measurement signals of the strain.

Depending on the type of sensor, that is a single sensor detecting an average value of the strain for the whole circumference of the socket, or a plurality of sensors distributed all along the circumference of the socket and detecting strain conditions localized for the positioning regions thereof, an average value of the strain or a set of values (a vector of strain values, composed of the individual local values derived from each strain sensor) is set respectively which are a kind of model of the strain.

The average strain value is a threshold strain value by means of which, through a comparator, the measured strain is compared with the theoretical one represented by said threshold. An indicator of the clamping condition displays said condition with reference to said threshold.

As an alternative or in combination it is possible to provide signaling means, preferably audio ones, for example comprising a buzzer.

On the contrary when there is provided a plurality of sensors theoretical strain vectors are defined by means of the setting interface, which form an upper bound and a lower bound of a range within which the vector of measured strain values have to remain.

The localized reading allows not only the absolute value associated to the strain as measured to be considered, but also the relative deviation of the different strain values along the circumference to be considered. The vectors that define the maximum and minimum threshold of the range within which the strain is considered as acceptable, delimit a range within which the values of the measured strains of the individual sensors can freely vary, while the clamping condition keeping the desired mechanical and sealing characteristics.

Typically and as it will be seen below, the maximum threshold and minimum threshold vectors and the vector of the measurement values can be represented by points on a two-dimensional plane, preferably by polar coordinates, thus generating a visual evaluation plot that immediately makes evident the strain conditions of the socket and therefore the clamping conditions with reference to the ideal conditions defined by the range from the maximum threshold vector to the minimum threshold vector. Graphically not only it is possible to evaluate the absolute values, but also the shape of their distribution along the circumference and therefore it is possible also to find asymmetries.

As already pointed out before in the case of the presence of a plurality of sensors arranged along the circumference of the socket, it is possible to provide in combination a threshold value about an "average" strain and average here means a value obtained by any type of functions applied to the measurement values deriving from the individual sensors.

The indicators of the clamping condition with reference to the different methods defining the thresholds indicate whether the occurred strain has been carried out properly or not on the basis of the comparison of the measured value with the set threshold value.

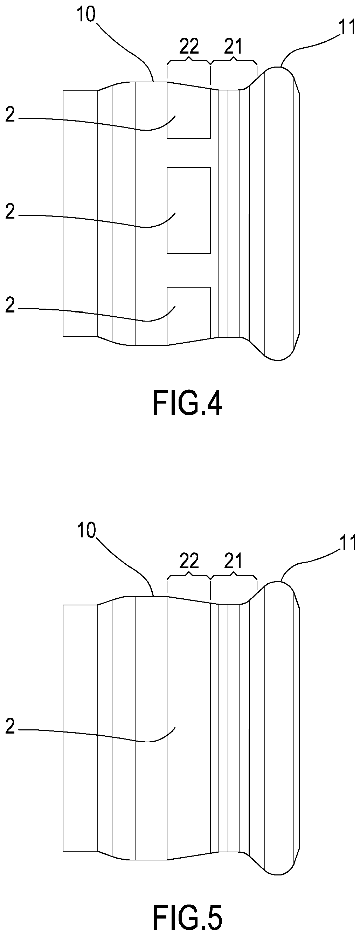

Figure 4 shows an embodiment wherein there is provided a plurality of sensors 2 arranged along the external circumference of the socket 10 for taking a divided measurement of the strain in order to obtain more localized information about the strain.

Figure 5 shows a variant embodiment wherein a single sensor 2 is placed on the whole external circumference of the socket 10 such to perform a single measurement about the total strain of the socket.

In figures 4 and 5 it is further seen on the shell surface of the socket 10 a first portion 21 for the action by the pressing unit and a second portion 22 wherein there are provided the strain sensors 2, the second portion 22 being adjacent to the first portion 21.

Particularly the first portion 21 is provided interposed between the second portion 22 and the radial enlargement 11 forming the recess housing an o-ring.

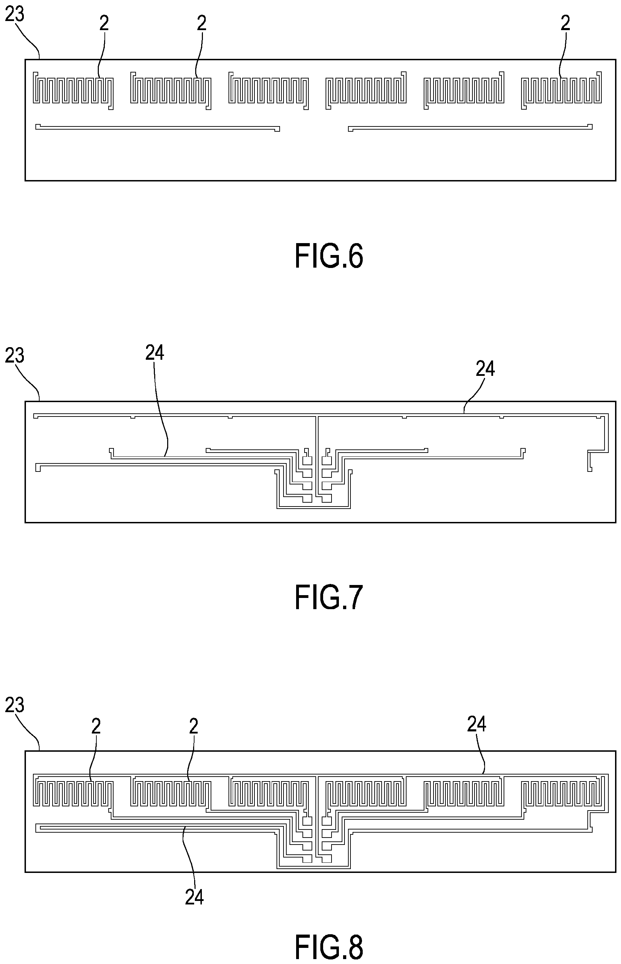

Figures 6 to 10 show data acquisition systems that comprise the sensors 2, which sensors 2 are composed of resistive strain gauges.

As it will be seen below there are different methods for making/applying the sensors to the fitting which mainly are divided in two alternative technologies. One wherein the sensors are individually made and then applied to the socket in the predetermined positions and one wherein the sensors are physically made directly on the fitting socket in the corresponding predetermined positions.

There is also a hybrid solution wherein the sensors are directly made on the socket, but the element with the connection conductors for taking the signal generated by the strain is separately made and it is applied to the fitting while contemporaneously generating also the electrical connections with the outputs of the sensors.

In figures 6 to 8 the sensors 2 are provided on a single flexible substrate 23 attached to the shell surface of the socket 10.

In one embodiment the substrate is composed of glossy paper for inkjet printing and/or adhesive polyvinyl material.

According to one embodiment the substrate is attached to the socket by an adhesive that can be of any suitable type.

Preferably and with no limitations the sensors 2 are made on the substrate 23 by a thick film screen printing technique, topography, flexography, by deposition or other known techniques.

In one embodiment the sensors 2 can be obtained by transferring pastes on the substrate 23 by extrusion through a screen and then a thermal treatment. In this case these substantially are techniques for making the sensors directly one the fitting by screen printing techniques or the like.

Pastes are composed of conductive, insulating, dielectric materials, etc, and the space resolution is smaller or equal to about 300 $\mu$m.

The thermal treatment following the deposition of the pastes on the substrate 23 can comprise different drying and desiccating methods.

Figure 6 shows six sensors 2 made on the substrate 23, intended to be positioned in six regions angularly equidistant from each other along the external circumference of the socket 10, when the group of sensors, and particularly the substrate, is coupled to the shell surface of the socket 10.

The sensors 2 shown in figure 6 have such dimensions and distances to enable the integral measurement of the strain along a predetermined angle extension in the circumferential direction of the socket. Particularly when the number of sensors is six as in this case and when the sensors are equidistant from each other the measurement of each sensor is about a circumference arc of 60° for press fittings with a diameter of 35 mm.

Figure 7 shows a plurality of connection tracks 24 made of an electrically conductive material made on the substrate 23, that connect the sensors 2 and that are also the output of the group of sensors 2.

Figure 8 shows the complete group of sensors, comprising the substrate 23 and the sensors 2 connected to the connection tracks 24.

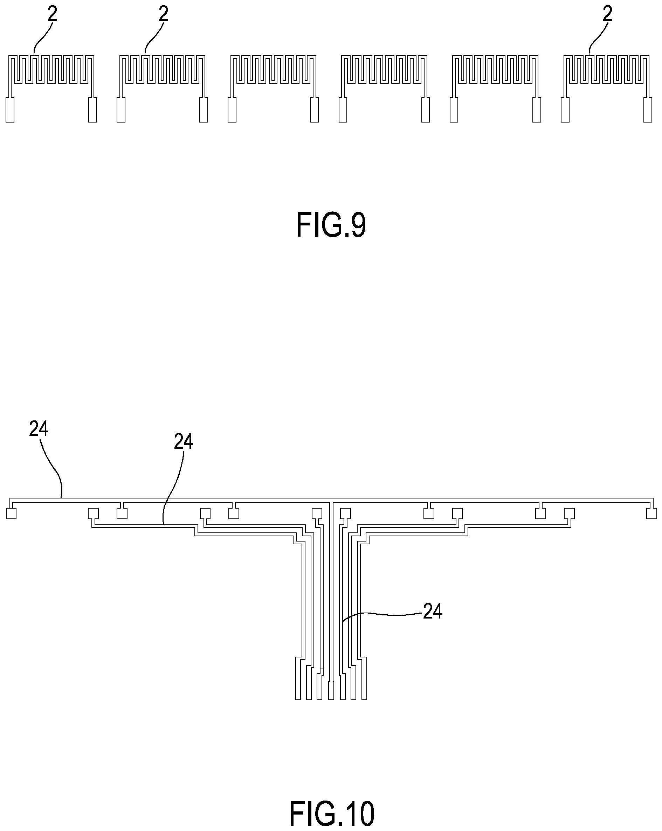

Figures 9 and 10 show a variant embodiment wherein the sensors 2 are printed on the shell surface of the socket 10, by ink-jet printing of conductive and/or resistive inks.

In this case, a layer of insulating material is interposed between the sensors 2 and the socket 10.

Figure 9 shows the six sensors 2 to be printed on the shell surface of the socket 10, which sensors 2 have end pads overlapping corresponding end pads provided in the connection tracks 24 and visible in figure 10, for the connection between the sensors 2 and the connection tracks 24.

The sensors 2 are made by resistive ink.

Figure 10 shows the connection tracks 24 to be printed on the shell surface of the socket 10.

The ends of the connection tracks 24 are grouped into a finger connector for the connection to the data acquisition system, that is to the measurement means 5 and relevant downstream systems.

Tracks are made of conductive ink.

In a variant embodiment the sensors 2 are printed on a flexible substrate 23 instead of being directly printed on the socket 10.

In this case the sensors 2 are printed on a vinyl adhesive tape and the connection tracks 24 are printed on a PET film.

Therefore a partial overlapping of the vinyl adhesive tape on the PET is made, the interconnection pads of the sensors 2 are aligned with the interconnection pads of the connection tracks, and these are later connected by the deposition of a conductive paste.

Therefore the substrate is glued on the press fitting and the finger connectors are inserted into a suitable spring connector of the electronic measurement board.

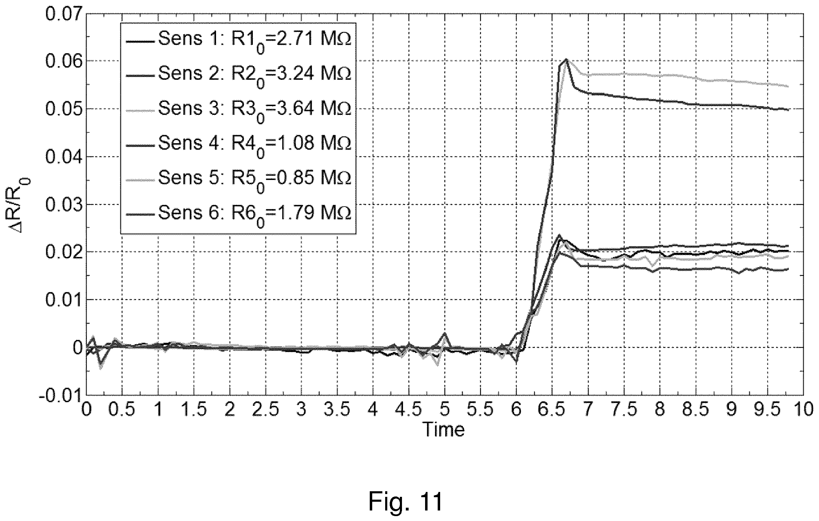

Figure 11 shows a plot of the trend over time of the strains measured by the six sensors, wherein it is possible to see how at time 6 the pressing begins to be exerted, and the sensors indicate the strain of the fitting.

It is possible to verify that different parts of the circumference of the socket 10 monitored by different sensors 2 have such different behaviors to be subjected to different strains during the pressing.

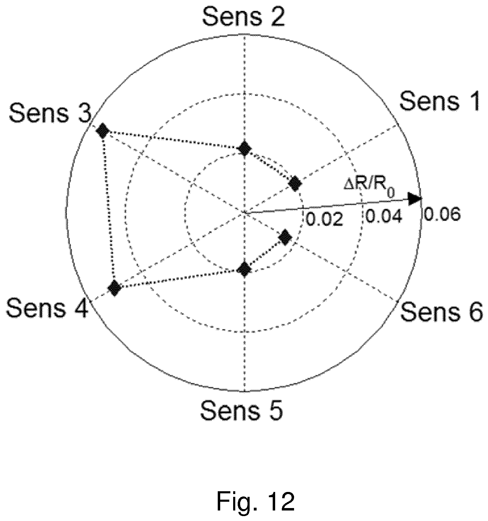

Figure 12 shows a polar plot of the strains measured by the sensors 2, such as displayed by the display means 8.

The strains measured in the different points of application of the six sensors along the circumference of the socket 10 of the press fitting 1 are shown, thus making it possible to define a threshold for defining the crimp that can be both an average value or a value derived from any other functions of the individual measurement values of the strain by the different sensors, as an alternative or in combination a validity range within which the values of the individual sensors can be considered consistent with a proper clamping of the socket on the pipe.

Here it is important to note that by defining the positions of the sensors in a polar plot, that represents a circle corresponding to the circumference of the socket and by defining the radius as the measurement of the electric signal corresponding to the strain, it is possible to draw strain patterns that consider the local values measured by each individual sensor. The thresholds of acceptability of the strain measurement values of each sensor are represented by circles or other closed shapes that delimit an annular band within which the individual points related to the measurement values of the individual sensors have to fall, thus generating a closed polygonal line that indicates not only whether or not the local values are provided within the conformity range between the provided maximum and minimum threshold, but by showing also a pattern of the distribution of the measurement values they point out also other anomalies or peculiarities. In the present case it is clear a high asymmetry of the local strains. It has to be noted that by considering only the average value of the strain such condition would not be detected and would not be considered since it could lead potentially to a wrong result since the strain asymmetry can have an acceptable average value with reference to the average value threshold of the strain, but on the other hand it can involve a leakage or a poor tightness when the strain and therefore the clamping are weaker.

According to a variant of the system using a fitting according to the present invention the sensors can be provided with an electric terminal in contact with at least one line for the communication of sensors with the processing units or chain, which terminal is provided on the fitting. The pressing tool has an input port interfacing with the output of the measurement system and particularly with the terminal provided on the fitting. According to one example the terminal on the fitting is in the form of a plurality of contact pads faced outwardly, and it can be automatically accessed by a corresponding terminal of the pressing tool. Such tool for example has a pin with a corresponding arrangement of contact pads which is placed against the terminal on the fitting upon the pressing, thus generating the electrical contact between sensors and pressing tool.

The pressing tool can be provided directly with the electronics necessary for the processing, storage and so on or it can form only the unit transmitting the signals taken from the sensors by means of the contact terminal. The processing can occur on a remote system that communicates with the tool according to one or more known wireless protocols depending on needs. The remote processing unit can be a smartphone, a pc or a dedicated unit.

A variant provides a RX/TX unit to be associated to the sensors on the fitting and provides that the signals are directly read in wireless mode by the sensors and loaded for the processing and the displaying in the reading unit that for instance is a mobile phone, a tablet, or the like without the need of providing the pressing unit as the processing unit.

Moreover the display of the results can occur both on a display associated to the processing unit, and on a display present within the tool and that receives the signals to be displayed from the remote processing unit when this is not integrated within the tool itself. The system is highly flexible and there are many possible combinations that the person skilled in the art can set depending on needs and that fall within the sphere of his/her basic technical knowledge.

Still according to a further variant, the sensors can be uniaxial, biaxial or triaxial depending on the accuracy needs of the measurement.

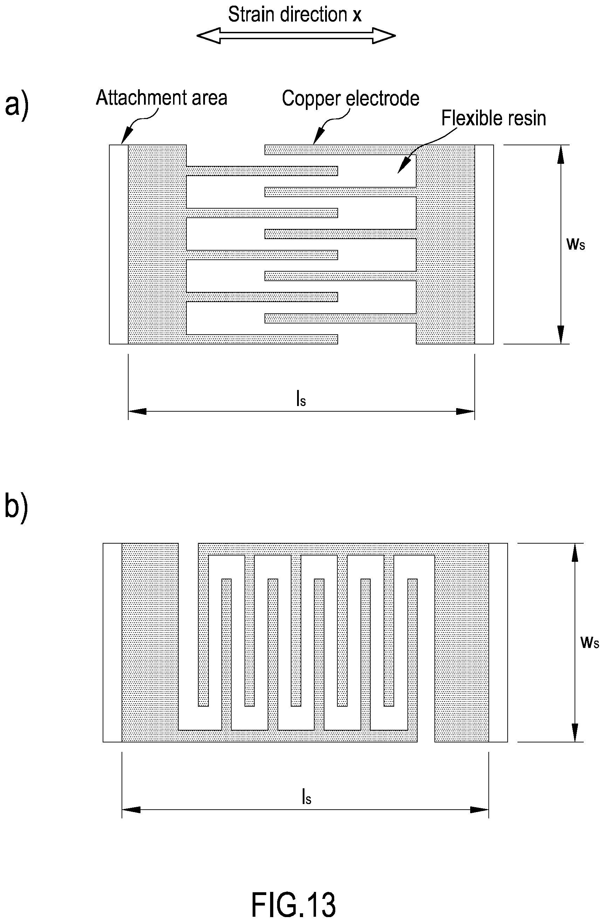

Fig.13 schematically is a strain sensor of the capacitive type particularly a biaxial capacitive strain gauge. The operating principle is exactly equal to the one of the resistive strain gauge, except that in this case, the strains lead to changes in the capacitance. These can be determined by changes in the dielectric constant or by changes in the surface of the conductor and/or in the distance of the conductors.

**Claims**

1. Press fitting (1), comprising a socket (10) provided with one end for the insertion of an end portion of a pipe (3) or the like which socket (10) is intended to be mechanically and tightly locked on said end portion of a pipe or the like by clamping and that is provided with strain sensors (2) able to transduce a strain of the socket into an electrical quantity, **characterized in that** there is provided a plurality of said sensors (2) distributed along the external circumference of the socket (10) while the socket (10) on the shell surface has a first portion (21) for the action by a pressing unit (4) such as pliers or the like and a second portion (22) upon which the pressing unit does not act and in which or on which there are provided said strain sensors (2), the second portion (22) being adjacent to the first one (21).

2. Fitting according to claim 1, wherein the sensors (2) are placed in regions angularly equidistant from each other.

3. Fitting according to claim 1, wherein said sensors (2) detects the strains along the whole circumference of the socket (10).

4. Fitting according to claim 2 or 3, wherein the sensors (2) are connected with at least one line for the communication with a processing unit.

5. Fitting according to one or more of the preceding claims, wherein the communication line is composed of electric conductors provided with terminals connecting to a reading unit by an electrical contact connection.

6. Fitting according to one or more of the preceding claims 1 to 4, wherein the communication line is wireless, a TX/RX transceiver or TX transmission section of the radio-frequency, Wifi, Bluetooth type or the like being associated to the sensor or sensors (2) and/or at least to the processing unit respectively.

7. Fitting according to one or more of the preceding claims, wherein the sensors (2) are transducers for the strain into electric signal, particularly they have an impedance variable dependent on their change in shape and/or size and especially they are resistive, capacitive or inductive strain sensors or combinations thereof.

8. Fitting according to one or more of the preceding claims, wherein the sensors (2) are separate elements applied on the socket (10) at predetermined locations or they are resistive strain gauges or capacitive strain gauges or inductive strain gauges or combinations thereof directly made on the socket (10) of the fitting.

9. Fitting according to one or more of the preceding claims, wherein said sensors (2) are provided on one or more, preferably on a single flexible substrate (23) that is fastened to the shell surface of the socket (10).

10. Fitting according to one or more of the preceding claims, wherein said sensors (2) are printed on the shell surface of the socket (10) in said second predetermined portion (22).

11. Fitting according to one or more of the preceding claims, wherein there is provided a communication interface comprising at least one communication line composed of at least one conductor applied on a flexible support and provided with terminals for the connection to the output of the sensor or sensors (2) and with a terminal for the connection to a cable connecting with a processing unit, which interface is fastenable to the socket (10) and to the sensor or sensors (2) automatically generating the mechanical contact to the fitting and the electric one to the sensor or sensors (2), while the sensor or sensors (2) are of the type manufactured on a substrate (23) flexible and fastened to the fitting or of the type made directly on the fitting.

12. Fitting according to claim 11, wherein a wireless TX/RX section is connected to the terminal connecting the communication line with the cable connecting to the processing unit instead of said connection cable, the processing unit being also connected to a TX/RX unit.

13. System for making pipe joints comprising at least one press fitting according one or more of the claims 1 to 12 and at least one pressing unit or tool being intended to strain the socket (10) such to clamp the socket against the external shell surface of the pipe said strain sensors (2) of the press fitting being able to transduce a strain of the socket into an electrical quantity and comprising means measuring the electrical quantity

**characterized in that** said sensors (2) are distributed angularly spaced from each other along a perimetral band of the fitting that is adjacent to the perimetral band upon which the pressing unit acts.

14. System according to claim 13, **characterized in that** it comprises a unit processing the electric signals of the strain sensors (2), which unit provides at least one comparator that compares the average signal or the individual signals separately or a combination of said individual signals respectively with a threshold value corresponding to an average value of the strain and/or with a range of strain values considered acceptable and that has a display unit and/or signalling means for displaying and/or signalling in other manners, preferably acoustically, the result of said comparison and the corresponding clamping condition of the socket (10) on the pipe.

15. System according to claim 13 or 14, wherein there are provided means displaying the signals generated by the sensors which means comprise a display where the data detected by said sensors (2) are displayed by a two-dimensional plot with polar coordinates, in such plot the angular positon corresponds to the position of the sensors (2) on the circumference of the socket (10) and the radial position with respect to the origin of the polar coordinate system corresponds to the strain, the range of the eligible strain values for each sensors (2) being defined by two circles concentric with each other and with the origin of the polar coordinate system.

16. System according to the claim 15, wherein at least a part of said processing unit is provided in the pressing unit or tool (4).

17. System according to one or more of the preceding claims 13 to 16, wherein the sensors (2) are provided with an electrical terminal contacting with at least one communication line with one or more sensors (2), which terminal is provided on the fitting and it is automatically accessible by a corresponding contact terminal of the pressing unit or tool (4) upon the pressing action on the socket (10) of the fitting.

18. Method for making pipe joints comprising the following steps:

a) surrounding an end of a pipe with a socket coupling end (10) of a press fitting;
b) straining the socket (10) with a pressing unit (4) such to clamp said socket (10) against the external shell surface of the pipe,

**characterized in that**
it comprises the following further step contemporaneously with step b):

c) measuring the strain of the socket (10) by strain sensors (2) able to transduce a strain of the socket (10) into an electrical quantity which sensors are arranged in a region of the socket adjacent to a strain region on which the pressing unit acts.

19. Method according to claim 18, **characterized in that** it is made by a system comprising the characteristics according to one or more of the claims 13 to 17.


**Patentansprüche**

1. Pressfitting (1), umfassend eine Buchse (10), die mit einem Ende zum Einsetzen eines Endabschnitts eines Rohrs (3) oder dergleichen versehen ist, wobei die Buchse (10) vorgesehen ist, um mechanisch und fest auf dem Endabschnitt eines Rohrs oder dergleichen durch Klemmung verriegelt zu sein, und mit Dehnungssensoren (2) versehen ist, die eine Dehnung der Buchse in eine elektrische Größe umwandeln können, **dadurch gekennzeichnet, dass** mehrere der Sensoren (2) bereitgestellt sind, die entlang des Außenumfangs der Buchse (10) verteilt sind, während die Buchse (10) auf der Mantelfläche einen ersten Abschnitt (21) für die Einwirkung durch eine Presseinheit (4) wie Zangen oder dergleichen und einen zweiten Abschnitt (22) hat, auf den die Presseinheit nicht einwirkt und in dem oder auf dem die Dehnungssensoren (2) versehen sind, wobei der zweite Abschnitt (22) benachbart zu dem ersten (21) ist.

2. Fitting nach Anspruch 1, wobei die Sensoren (2) in Bereichen platziert sind, die zueinander den gleichen Winkelabstand haben.

3. Fitting nach Anspruch 1, wobei die Sensoren (2) die Dehnungen entlang des gesamten Umfangs der Buchse (10) erfassen.

4. Fitting nach Anspruch 2 oder 3, wobei die Sensoren (2) mit mindestens einer Leitung für die Kommunikation mit einer Verarbeitungseinheit verbunden sind.

5. Fitting nach einem oder mehreren der vorhergehenden Ansprüche, wobei die Kommunikationsleitung aus elektrischen Leitern besteht, die mit Anschlüssen versehen sind, die mit einer Leseeinheit durch eine elektrische Kontaktverbindung verbunden sind.

6. Fitting nach einem oder mehreren der vorhergehenden Ansprüche 1 bis 4, wobei die Kommunikationsleitung drahtlos ist, wobei ein Sendeempfänger oder ein Sendeabschnitt des Hochfrequenz-, WLAN-, Bluetooth-Typs oder dergleichen dem Sensor oder den Sensoren (2) und/oder der Verarbeitungseinheit zugeordnet ist.

**7.** Fitting nach einem oder mehreren der vorhergehenden Ansprüche, wobei die Sensoren (2) Wandler für die Dehnung in ein elektrisches Signal sind, wobei sie insbesondere eine Impedanzvariable haben, die von ihrer Form- und/oder Größenänderung abhängt, und insbesondere resistive, kapazitive oder induktive Dehnungssensoren oder Kombinationen davon sind.

**8.** Fitting nach einem oder mehreren der vorhergehenden Ansprüche, wobei die Sensoren (2) getrennte Elemente sind, die auf der Buchse (10) an vorbestimmten Stellen aufgebracht sind, oder wobei sie resistive Dehnungsmesser oder kapazitive Dehnungsmesser oder induktive Dehnungsmesser oder Kombinationen davon sind, die direkt auf der Buchse (10) des Fittings hergestellt sind.

**9.** Fitting nach einem oder mehreren der vorhergehenden Ansprüche, wobei die Sensoren (2) auf einem oder mehreren, vorzugsweise auf einem einzelnen flexiblen Substrat (23) bereitgestellt sind, das an einer Mantelfläche der Buchse (10) befestigt ist.

**10.** Fitting nach einem oder mehreren der vorhergehenden Ansprüche, wobei die Sensoren (2) auf der Mantelfläche der Buchse (10) in dem zweiten vorbestimmten Abschnitt (22) aufgedruckt sind.

**11.** Fitting nach einem oder mehreren der vorhergehenden Ansprüche, wobei eine Kommunikationsschnittstelle bereitgestellt ist, die mindestens eine Kommunikationsleitung umfasst, die aus mindestens einem Leiter besteht, der auf einem flexiblen Träger aufgebracht ist und mit Anschlüssen für die Verbindung mit dem Ausgang des Sensors oder der Sensoren (2) und mit einem Anschluss für die Verbindung mit einem Kabel, das mit einer Verarbeitungseinheit verbunden ist, bereitgestellt ist, wobei die Schnittstelle an der Buchse (10) und an dem Sensor oder den Sensoren (2) befestigbar ist, wobei automatisch der mechanische Kontakt mit dem Fitting und der elektrische Kontakt mit dem Sensor oder den Sensoren (2) erzeugt wird, während der Sensor oder die Sensoren (2) von dem Typ sind, der auf einem Substrat (23) gefertigt ist, das flexibel und an dem Fitting befestigt ist, oder von dem Typ, der direkt auf dem Fitting hergestellt ist.

**12.** Fitting nach Anspruch 11, wobei ein drahtloser Sendeempfängerabschnitt mit dem Anschluss verbunden ist, der die Kommunikationsleitung mit dem Kabel verbindet, das anstatt dem Verbindungskabel mit der Verarbeitungseinheit verbindet, wobei die Verarbeitungseinheit auch mit einer Sendeempfängereinheit verbunden ist.

**13.** System zum Herstellen von Rohrverbindungen, das mindestens ein Pressfitting nach einem oder mehreren der Ansprüche 1 bis 12 und mindestens eine Presseinheit oder ein Werkzeug umfasst, die/das vorgesehen ist, um die Buchse (10) derart zu dehnen, dass die Buchse gegen die äußere Mantelfläche des Rohrs geklemmt wird, wobei die Dehnungssensoren (2) des Pressfittings eine Dehnung der Buchse in eine elektrische Größe umwandeln können und Mittel zum Messen der elektrischen Größe umfassend,
**dadurch gekennzeichnet, dass** die Sensoren (2) winkelmäßig voneinander beabstandet entlang eines Umfangsstreifens des Fittings verteilt sind, der benachbart zu dem Umfangsstreifen ist, auf den die Presseinheit einwirkt.

**14.** System nach Anspruch 13, **dadurch gekennzeichnet, dass** es eine Einheit umfasst, welche die elektrischen Signale der Dehnungssensoren (2) verarbeitet, wobei die Einheit mindestens einen Vergleicher bereitstellt, der jeweils das durchschnittliche Signal oder die einzelnen Signale getrennt oder eine Kombination der einzelnen Signale mit einem Schwellenwert, der einem durchschnittlichen Wert der Dehnung entspricht, und/oder einer Reihe von Dehnungswerten, die als akzeptabel erachtet werden, vergleicht und die eine Anzeigeeinheit und/oder signalgebende Mittel zum Anzeigen und/oder Signalgeben in anderen Weisen, vorzugsweise akustisch, des Ergebnisses des Vergleichs und der entsprechenden Klemmbedingung der Buchse (10) auf dem Rohr hat.

**15.** System nach Anspruch 13 oder 14, wobei Mittel bereitgestellt sind, welche die Signale anzeigen, die durch die Sensoren erzeugt werden, wobei die Mittel eine Anzeige umfassen, auf der die Daten, die durch die Sensoren (2) erfasst werden, durch eine zweidimensionale Darstellung mit Polarkoordinaten angezeigt werden, wobei in der Darstellung die Winkelposition der Position der Sensoren (2) auf dem Umfang der Buchse (10) entspricht, und die radiale Position in Bezug auf den Ursprung des Polarkoordinatensystems der Dehnung entspricht, wobei die Reihe der gültigen Dehnungswerte für jeden Sensor (2) durch zwei Kreise definiert sind, die zueinander und zu dem Ursprung des Polarkoordinatensystems konzentrisch sind.

**16.** System nach Anspruch 15, wobei mindestens ein Teil der Verarbeitungseinheit in der Presseinheit oder dem Werkzeug (4) bereitgestellt ist.

**17.** System nach einem oder mehreren der vorhergehenden Ansprüche 13 bis 16, wobei die Sensoren (2) mit einem elektrischen Anschluss versehen sind, der mit mindestens einer Kommunikationsleitung mit einem oder mehr Sensoren (2) in Kontakt ist, wobei der Anschluss auf dem Fitting bereitgestellt ist, und es automatisch durch einen entsprechenden Kontaktanschluss der Presseinheit oder des Werkzeugs (4) bei der Presseinwirkung auf die Buchse (10) des Fittings zugänglich ist.

18. Verfahren zum Herstellen von Rohrverbindungen, das die folgenden Schritte umfasst:

a) Umgeben eines Endes eines Rohrs mit einem Buchsenkopplungsende (10) eines Pressfittings;
b) Dehnen der Buchse (10) mit einer Presseinheit (4) derart, dass die Buchse (10) gegen die äußere Mantelfläche des Rohrs geklemmt wird,

**dadurch gekennzeichnet, dass**
es ferner den folgenden Schritt gleichzeitig mit Schritt b) umfasst:

c) Messen der Dehnung der Buchse (10) durch Dehnungssensoren (2), die eine Dehnung der Buchse (10) in eine elektrische Größe umwandeln können, wobei die Sensoren in einem Bereich der Buchse angeordnet sind, der benachbart zu einem Dehnungsbereich ist, auf den die Presseinheit einwirkt.

19. Verfahren nach Anspruch 18, **dadurch gekennzeichnet, dass** es durch ein System ausgeführt wird, das die Merkmale nach einem oder mehreren der Ansprüche 13 bis 17 umfasst.

**Revendications**

1. Raccord à presser (1) comprenant un embout (10, 10', 10'', 10''') pourvu d'une extrémité pour recevoir une partie d'extrémité d'un tuyau (3) ou similaires, ledit embout (10) étant destiné à réaliser un blocage mécanique et étanche sur ladite partie d'extrémité d'un tuyau ou similaire par serrage, et étant pourvu de capteurs de contrainte (2) capables de transformer une déformation de l'embout en une grandeur électrique, **caractérisé en ce qu'**une pluralité de ces capteurs (2) sont agencés le long de la circonférence externe de l'embout (10), alors que l'embout présente, sur la surface de son enveloppe, une première partie (21) destinée à l'action d'une unité de pressage (4), comme des pinces ou similaires, et une deuxième partie (22) sur laquelle l'unité de pressage n'agit pas, et dans ou sur laquelle sont situés lesdits capteurs de contrainte (2) la deuxième partie (22) étant adjacente à la première (21).

2. Raccord selon la revendication 1, dans lequel les capteurs (2) sont placés dans des zones situés à la même distance angulaire entre elles.

3. Raccord selon la revendication 1, dans lequel lesdits capteurs (2) détectent les contraintes le long de la circonférence de l'embout (10).

4. Raccord selon la revendication 2 ou 3, dans lequel les capteurs (2) sont connectés à au moins une ligne de communication avec une unité de traitement.

5. Raccord selon l'une ou plusieurs des revendications précédentes, dans lequel la ligne de communication est composée de conducteurs électriques pourvus de bornes de connexion à une unité de lecture par contact électrique.

6. Raccord selon l'une ou plusieurs des revendications précédentes 1 à 4, dans lequel la ligne de communication est sans fil, un émetteur-récepteur TX/RX ou une section d'émission TX de type à radio-fréquence, WiFi, Bluetooth ou similaire étant associé respectivement au/x capteur/s et/ou au moins à l'unité de traitement.

7. Raccord selon une ou plusieurs des revendications précédentes, dans lequel les capteurs (2) sont des transducteurs pour transformer la contrainte en signal électrique, et notamment ont une variable d'impédance dépendant de leur variation de forme et/ou de dimensions, et sont spécialement des capteurs de contrainte de type résistif, capacitif ou inductif, ou des combinaisons de ceux-ci.

8. Raccord selon l'une ou plusieurs des revendications précédentes, dans lequel les capteurs (2) sont des éléments séparés appliqués sur l'embout (10) à des endroits prédéterminés ou sont des jauges de contrainte résistifs, des jauges de contrainte capacitifs, ou des jauges de contrainte inductifs ou des combinaisons de ceux-ci, formés directement sur l'embout (10) du raccord.

9. Raccord selon l'une ou plusieurs des revendications précédentes, dans lequel lesdits capteurs (2) sont situés sur une ou plusieurs, de préférence sur un seul substrat flexible (23) fixé à la surface d'enveloppe de l'embout (10).

10. Raccord selon l'une ou plusieurs des revendications précédentes, dans lequel lesdits capteurs (2) sont estampés sur la surface d'enveloppe de l'embout (10) dans ladite deuxième partie prédéterminée (22).

11. Raccord selon l'une ou plusieurs des revendications précédentes, comportant au moins une interface de communication, qui comprend au moins une ligne de communication, composée d'au moins un conducteur appliqué sur un support flexible et pourvu de bornes pour la connexion à la sortie du/des capteur/s (2) et d'une borne pour la connexion à un câble de connexion avec une unité de traitement, ladite interface étant apte à être fixée à l'embout (10) et à un ou plusieurs capteurs (2), créant automatiquement le contact mécanique avec le raccord et le contact électrique avec le/les capteur/s (2), alors que le/les capteur/s (2) sont du type fabriqué sur un substrat (23) flexible et fixé au raccord ou du type formé directement sur le raccord.

12. Raccord selon la revendication 11, dans lequel, au lieu du câble de connexion, une section TX/RX sans fil est connectée à la borne qui connecte la ligne de communication avec le câble pour la connexion à l'unité de traitement, l'unité de traitement étant également connectée à une unité TX/RX.

13. Système de fabrication de jonctions de tuyaux comprenant au moins un raccord à presser selon l'une ou plusieurs des revendications 1 à 12, et au moins une unité ou outil de pressage, destiné à exercer une contrainte sur l'embout (10) de manière à serrer l'embout contre la surface d'enveloppe externe du tuyau, lesdits capteurs de contrainte (2) du raccord à presser étant capables de transformer une contrainte de l'embout en une grandeur électrique et comprenant des moyens de mesure de la grandeur électrique
**caractérisé en ce que** lesdits capteurs (2) sont agencés à une distance angulaire entre eux le long d'une bande périmétrale du raccord, qui est adjacente à la bande périmétrale sur laquelle agit l'unité de pressage.

14. Système selon la revendication 13, **caractérisé en ce qu'**il comprend une unité de traitement des signaux électriques des capteurs de contrainte (2), ladite unité comportant au moins un comparateur qui compare respectivement le signal moyen ou les signaux individuels séparément ou une combinaison desdits signaux individuels avec une valeur seuil correspondant à une valeur moyenne de la contrainte et/ou avec une plage de valeurs de contrainte considérées acceptables, et possédant une unité d'affichage et/ou des moyens de signalisation pour afficher et/ou signaler autrement, de préférence acoustique, le résultat de ladite comparaison et la condition de serrage correspondante de l'embout (10) sur le tuyaux.

15. Système selon la revendication 13 ou 14, comportant des moyens d'affichage des signaux générés par les capteurs, lesdits moyens comprenant un écran sur lesquels les données détectées par lesdits capteurs (2) sont affichées par un tracé bidimensionnel avec des coordonnées polaires, la position angulaire dans ledit tracé correspondant à la position des capteurs (2) sur la circonférence de l'embout (10) et la position radiale par rapport à l'origine du système de coordonnées polaires correspondant à la contrainte, la plage des valeurs de contrainte possibles pour chaque capteur (2) étant définie par deux cercles concentriques et avec l'origine du système de coordonnées polaires.

16. Système selon la revendication 15, dans lequel au mois une partie de ladite unité de traitement est située dans l'unité ou l'outil de pressage (4).

17. Système selon une ou plusieurs des revendications précédentes 13 à 16, dans lequel les capteurs (2) sont pourvus d'une borne électrique en contact avec au moins une ligne de communication avec un ou plusieurs capteurs (2), ladite borne étant prévue sur le raccord et étant automatiquement accessible par une borne de contact correspondante de l'unité ou de l'outil de pressage (4) au moment de l'action de pression sur l'embout (10) du raccord.

18. Procédé de fabrication de jonctions de tuyaux, comprenant les étapes consistant à :

   a) entourer une extrémité d'un tuyau avec une extrémité d'accouplement d'embout (10) d'un raccord a presser ;
   b) exercer une contrainte sur l'embout (10) par une unité de pressage (4) de manière à serrer ledit embout (10) contre la surface d'enveloppe externe du tuyau,

   **caractérisé en ce qu'**il comprend en même temps que l'étape b), l'étape supplémentaire consistant à :

   c) mesurer la contrainte de l'embout (10) au moyen de capteurs de contrainte (2) capables de transformer une contrainte de l'embout (10) en une grandeur électrique, lesdits capteurs étant agencés dans une région de l'embout adjacente à une région de contrainte sur laquelle agit l'unité de pressage.

19. Procédé selon la revendication 18, **caractérisé en ce qu'**il est exécuté par un système comprenant les caractéristiques selon l'une ou plusieurs des revendications 13 à 17.

FIG.1

FIG.2

Fig. 3

FIG.4

FIG.5

FIG.6

FIG.7

FIG.8

FIG.9

FIG.10

Fig. 11

Fig. 12

FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009021972 A